(19) Europäisches Patentamt European Patent Office Office européen des brevets

(11) EP 2 221 339 B1

(12) EUROPEAN PATENT SPECIFICATION

(45) Date of publication and mention of the grant of the patent:
02.04.2014 Bulletin 2014/14

(51) Int Cl.:
*C08L 23/10* (2006.01)    *C08L 23/08* (2006.01)
*C08F 8/30* (2006.01)    *C08K 7/06* (2006.01)

(21) Application number: 08855703.8

(22) Date of filing: 26.11.2008

(86) International application number:
PCT/JP2008/071437

(87) International publication number:
WO 2009/069649 (04.06.2009 Gazette 2009/23)

(54) **MOLDED ARTICLE OF FILLER-REINFORCED POLYPROPYLENE RESIN COMPOSITION**

FORMKÖRPER AUS FÜLLSTOFFVERSTÄRKTER POLYPROPYLENHARZZUSAMMENSETZUNG

ARTICLE MOULÉ D'UNE COMPOSITION DE RÉSINE DE POLYPROPYLÈNE RENFORCÉE PAR DES CHARGES

(84) Designated Contracting States:
AT BE BG CH CY CZ DE DK EE ES FI FR GB GR
HR HU IE IS IT LI LT LU LV MC MT NL NO PL PT
RO SE SI SK TR

(30) Priority: 28.11.2007 JP 2007307589

(43) Date of publication of application:
25.08.2010 Bulletin 2010/34

(73) Proprietor: Mitsui Chemicals, Inc.
Tokyo 105-7117 (JP)

(72) Inventors:
• MORI, Akihide
Sodegaura-shi
Chiba 299-0265 (JP)
• OOCHI, Hiroyasu
Sodegaura-shi
Chiba 299-0265 (JP)

(74) Representative: HOFFMANN EITLE
Patent- und Rechtsanwälte
Arabellastrasse 4
81925 München (DE)

(56) References cited:
WO-A1-2005/097840    WO-A1-2006/098290
WO-A1-2007/086434    JP-A- 5 311 069
JP-A- 2005 060 592    JP-A- 2005 213 478
JP-A- 2006 241 445

**Description**

Technical Field

The present invention relates to a molded article of a filler-reinforced polypropylene resin composition. More specifically, molded article of the present invention includes an aid for filler-reinforced resins which is obtained by a reaction between a polyolefin resin having a group reactive with a carbodiimide group and a compound having a carbodiimide group. The molded article which is formed by molding the filler-reinforced polypropylene resin composition has superior mechanical characteristics.

Background Art

Polyolefins, such as a polypropylene and a polyethylene, have been molded by various methods and have been used in various applications. However, depending on applications, a polyolefin, in particular, a polypropylene, may not have a sufficient heat resistance, stiffness, and strength, and in the case described above, reinforcement is performed by a filler, such as talc or glass fiber. However, for example, when dispersion of the filler is not sufficient and/or adhesion between the filler and a polypropylene is poor, a sufficient reinforcing effect of the filler may not be obtained in many cases. Hence, various silane coupling agents or titanate coupling agents are added in melt compounding, or the surface of the filler is treated by a higher fatty acid or the like in some cases. However, the effect thereof is not enough.

In particular, when glass fiber or mica is used as an inorganic filler, the following has been known as reported in JP-A-4-198243: when interface adhesion between a polypropylene and the filler is improved by addition of a maleic anhydride modified polypropylene or the like, mechanical characteristics of the composition can be improved.

In addition, an attempt has been carried out to improve the reinforcing effect by further dispersing a carbon fiber. For example, JP-A-2003-277525 discloses a carbon fiber resin composition obtained by processing a carbon fiber treated by a sizing agent with a maleic anhydride modified polypropylene. The composition has an improved impregnation characteristic, and however has an insufficient strength as same as before. As measures for the improvement, there has been an attempt to use a composition containing an amino or an epoxy-modified polyolefin resin instead of a maleic anhydride modified polypropylene (for example, JP-A-2005-213478 and JP-A-2005-213479; however, the composition still does not have a sufficient practical strength.

In addition, as a modifying agent for polyolefins, a compound having a carbodiimide group has been known. In WO 2005/097840, a compound having a carbodiimide group is used as a compatibilizer between a polymer having a polar group and an olefin polymer. However, this invention relates to compatibilization between polymer molecules, and an improvement in strength of a filler-reinforced polyolefin has not been disclosed at all. In addition, in WO 2005/098290, an adhesive including a carbodiimide group modified polyolefin has been disclosed. In this invention, an adhesive strength between a polyolefin layer and a polar resin layer has been disclosed. However, improvement in strength of a filler-reinforced polyolefin has not been disclosed at all.

Disclosure of Invention

Problems to be Solved by the Invention

An object of the present invention is to provide a molded article comprising an aid for a filler-reinforced resin used in a filler-containing polypropylene and being capable of improving the reinforcing properties and dispersibility of the filler, to yield a filler-reinforced polypropylene resin composition capable of giving the molded article superior mechanical characteristics, such as an impact resistance and a flexural strength.

Means for Solving the Problems

The inventors of the present invention found through intensive research that a modified polyolefin obtained by a reaction between a polyolefin resin (A) having a group reactive with a carbodiimide group and a compound (B) having a carbodiimide group improves the reinforcing properties and dispersibility of a filler in a filler-reinforced polypropylene resin composition, and as a result, the present invention has been achieved.

That is, the present invention provides a molded article (I) obtained by molding a filler-reinforced resin composition (H) comprising

(i) 0.01-50 pbw of a modified polyolefin (C) or a composition (E);

(ii) 20-99 pbw of a polypropylene-based resin (F); and

(iii) 1-80 pbw of a filler (G)

per 100 pbw of the total of (F) and (G).
wherein the modified polyolefin (C) is obtained by reacting

- a polyolefin resin (A) having a group reactive with a carbodiimide group, and

- a compound (B) having a carbodiimide group,

and having a carbodiimide group content of 1-200 mmol per 100 g of the modified polyolefin as determined by infrared spectroscopy, and
wherein the composition (E) is obtained by reacting the polyolefin resin (A) and the compound (B) in the presence of a non-modified polyolefin (D), and
wherein the filler (G) includes a carbon fiber.

Preferred embodiments of the invention are as defined in the appended dependent claims.
The aid for filler-reinforced resins represented by the carbodiimide modified polyolefin resin (C) improves the reinforcing properties and dispersibility of the filler in a filler-reinforced resin composition.
Further, molding this filler-reinforced resin composition provides the present molded article which has superior characteristics, such as an impact resistance and a flexural strength, and the molded article thus obtained may be suitably used for e.g. components of automobiles, and particularly, for components which are required to have e.g. stiffness, impact resistance and durability.

Best Modes for Carrying Out the Invention

Hereinafter, the present invention will be described in more detail.
A modified polyolefin (C) invention, which is a carbodiimide modified polyolefin resin, is a mollified polyolefin obtained by a reaction between a polyolefin resin (A) having a group reactive with a carbodiimide group and a compound (B) having a carbodiimide group, and has a content of the carbodiimide group to 100 g of the modified polyolefin of 1 to 200 mmol.
In addition, an composition (E) is obtained by a reaction between the polyolefin resin (A) and the compound (B) in the presence of a non-modified polyolefin (D).
Furthermore, a filler-reinforced resin composition (H) is a composition including a polypropylene-based resin (F), a filler (G), and the modified polyolefin (C) or the composition (E).
Hereinafter, the individual components will be described.

Polyolefin resin (A) having a group reactive with a carbodiimide group

The polyolefin resin (A) can be obtained by introducing a compound (a) having a group reactive with a carbodiimide group to a polyolefin.
As the compound (a) having a group reactive with a carbodiimide group, a compound having a group which has active hydrogen reactive with a carbodiimide group may be mentioned. Specifically, a compound having a group derived from e.g. a carboxylic acid, an amine, an alcohol or a thiol may be mentioned. Among those mentioned above, the compound having a group derived from a carboxylic acid is preferably used, and in particular, an unsaturated carboxylic acid and/or a derivative thereof is preferable. Besides the compound having a group which has active hydrogen, a compound having a group which is easily converted into a group having active hydrogen by water may also be used. Specifically, a compound having an epoxy group or a glycidyl group may be mentioned. In the present invention, as the compound (a) one compound may be used alone, or at least two kinds of compounds may be used in combination.
When an unsaturated carboxylic acid and/or a derivative thereof is used in the present invention as the compound (a) an unsaturated compound having at least one carboxylic acid group, an unsaturated compound having at least one carboxylic anhydride group, and a derivative thereof may be mentioned. As the unsaturated group, for example, a vinyl group, a vinylene group, and an unsaturated cyclic hydrocarbon group may be mentioned. As a specific example of the above derivative, there may be mentioned an unsaturated carboxylic acid, such as acrylic acid, methacrylic acid, maleic acid, fumaric acid, tetrahydrophthalic acid, itaconic acid, citraconic acid, crotonic acid, isocrotonic acid, norbornene dicarboxylic acid, bicyclo[2,2,1]hept-2-ene-5,6-dicarboxylic acid, an anhydride thereof, and a derivative of the above compound (such as an acid halide, an amide, an imide, and an ester). As a specific example of the compound, there may be mentioned malenyl chloride, malenyl imide, maleic anhydride, itaconic anhydride, citraconic anhydride, tetrahydrophthalic anhydride, bicyclo[2,2,1]hept-2-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyc-

3

lo[2,2,1]hept-2-ene-5,6-dicarboxylate, hydroxyethyl (meth)acrylate, hydroxypropyl (meth)acrylate, glycidyl (meth)acrylate, aminoethyl methacrylate and aminopropyl methacrylate.

When an unsaturated carboxylic acid and/or a derivative thereof is used as the compound (a), one compound may be used alone, or at least two kinds of compounds may be used in combination. Among those mentioned above, maleic anhydride, (metha)acrylic acid, itaconic anhydride, citraconic anhydride, tetrahydrophthalic anhydride, bicyclo[2,2,1]hept-2-ene-5,6-dicarboxylic anhydride, hydroxyethyl (metha)acrylate, glycidyl methacrylate, and aminopropyl methacrylate are preferable. Furthermore, a dicarboxylic anhydride, such as maleic anhydride, itaconic anhydride, citraconic anhydride, tetrahydrophthalic anhydride, and bicycle[2,2,1]hept-2-ene-5,6-dicarboxylic anhydride, are particularly preferable.

As a method for introducing the compound (a) into a polyolefin, a known method may be used. For example, there may be mentioned a method for performing graft copolymerization of the compound (a) to a polyolefin main chain and a method for performing radical copolymerization of an olefin and the compound (a) .

Hereinafter, the case of graft copolymerization and the case of radical copolymerization will be separately described in detail.

<Graft copolymerization>

The polyolefin resin (A) can be obtained by performing graft copolymerization of the compound (a) to a polyolefin main chain.

(Polyolefin main chain)

A polyolefin used as the polyolefin main chain is a polymer primarily comprising an aliphatic α-olefin having 2 to 20 carbon atoms, a cyclic olefin, a non-conjugated diene, or an aromatic olefin, preferably a polymer primarily comprising an α-olefin having 2 to 10 carbon atoms, and more preferably a polymer primarily comprising an α-olefin having 2 to 8 carbon atoms. These olefins each used as a primary component of the polyolefin main chain may be used alone or in combination. The content of an olefin for a co-monomer of the olefin used as a primary component is generally 50 molar percent or less, preferably 40 molar percent or less, and more preferably 30 molar percent or less. In the present invention, as the olefin for a co-monomer of the olefin used as a primary component, a homopolymer or a copolymer of ethylene, propylene, 1-butene, 4-methyl-1-pentene, 3-methyl-1-butene, 1-hexene, 1-octene, tetracyclododecene, norbornene, or styrene may be preferably used. In addition, an olefin having an isotactic structure and an olefin having a syndiotactic structure may both be used, and the stereoregularity is also not particularly limited.

The density of the polyolefin used for graft modification is generally 0.8 to 1.1 g/cm$^3$, preferably 0.8 to 1.05 g/cm$^3$, and more preferably 0.8 to 1.0 g/cm$^3$. A melt flow rate (MFR) at 190°C or 230°C and at a load of 2.16 kg in accordance with ASTM D1238 is generally 0.01 to 500 g/10 min, preferably 0.05 to 300 g/10 min, and more preferably 0.1 to 100 g/10 min. When the density and the MFR are in the ranges described above, the density and the MFR of the modified graft copolymer become approximately equivalent to those described above, and therefore the handling can be easily performed.

In addition, the crystallinity of the polyolefin used for graft modification is generally 2% or more, preferably 5% or more, and more preferably 10% or more. When the crystallinity is in the range described above, the modified graft copolymer has superior handling properties.

The number average molecular weight (Mn) of the polyolefin used for graft modification measured by gel permeation chromatography (GPC) is preferably 5,000 to 500,000 and more preferably 10,000 to 100,000. When the number average molecular weight (Mn) is in the range described above, the handling properties are superior. In an ethylene-based polyolefin, the number average molecular weight (Mn) can be obtained by polyethylene conversion when the co-monomer amount is 10 molar percent or less and can be obtained by ethylene-propylene conversion (based on an ethylene content of 70 molar percent) when the co-monomer amount is 10 molar percent or more. In addition, in a propylene-based polyolefin, the number average molecular weight (Mn) can be obtained by polypropylene conversion when the co-monomer amount is 10 molar percent or less and can be obtained by propylene-ethylene conversion (based on a propylene content of 70 molar percent) when the co-monomer amount is 10 molar percent or more.

The polyolefin described above may be manufactured by any conventionally known method, and for example, polymerization can be performed, using a titanium-based catalyst, a vanadium-based catalyst, or a metallocene catalyst. In addition, the polyolefin used for graft modification may be either a resin or an elastomer; may have either an isotactic structure or a syndiotactic structure; and the stereoregularity is also not particularly limited. A commercially available resin may also be used without any treatment.

(Graft polymerization method)

When the polyolefin resin (A) is obtained by graft copolymerization, a compound having a group reactive with a carbodiimide group and, if necessary, another ethylenic unsaturated monomer and the like are graft-polymerized to the polyolefin as a graft main chain in the presence of a radical initiator.
A method for grafting a compound having a group reactive with a carbodiimide group to a polyolefin main chain is not particularly limited, and a conventionally known graft polymerization method, such as a solution method or a melt kneading method, may be used.

<Radical copolymerization>

The polyolefin resin (A) may also be obtained by performing radical copolymerization of an olefin and the compound (a) having a group reactive with a carbodiimide group. As the olefin, the same olefin as that used when the polyolefin for a graft main chain is formed may be used, and in addition, the compound (a) is also as described above.
A method for copolymerizing of an olefin and a compound having a group reactive with a carbodiimide group is not particularly limited, and a conventionally known radical copolymerization method may be used.

(Method for manufacturing the polyolefin resin (A)) )

In the present invention, the compound (a) is used so that the content thereof in the polyolefin resin (A) is generally 0.1 to 10 percent by weight, preferably 0.1 to 3.0 percent by weight, and more preferably 0.1 to 2.0 percent by weight. When the content of the compound (a) is more than the above range and is excessive, the compound (a) is crosslinked by the compound (B) having a carbodiimide group, and manufacturing of the modified polyolefin (C) may be difficult in some cases. In addition, when the content is in the above range or less, the modified polyolefin (C) can be manufactured, but the number of bonding portions, which are formed between the compound (B) and the polyolefin resin (A) and which function to form a skeleton of the modified polyolefin (C), is decreased. This causes insufficient improvement of the reinforcing properties and dispersibility of the filler in a filler-reinforced resin composition.
From the viewpoint of preventing the crosslinking, a smaller number average molecular weight of the polyolefin resin (A) is preferable, and a smaller molar ratio, (the number of molecules of the compound (a) )/(the number of molecules of the polyolefin copolymer (A) molecular chain) is preferable. Namely, this indicates that in the case in which the number of the compound (a) present on the molecular chain of the polyolefin resin (A) is not plural and is close to be singular, the carbodiimide group (N=C=N) of the compound (B) reacts with the compound (a) to be bonded without causing crosslinking and gelation.
In the present invention, controlling the number average molecular weight (Mn) of the polyolefin resin (A) and the content of the compound (a) prevents degradation in manufacturing stability caused by crosslinking in the manufacturing of the modified polyolefin (C). In addition, when a filler-reinforced resin composition is formed using the modified polyolefin (C), the reinforcing properties and dispersibility of the filler are sufficiently improved. That is, in the present invention, the polyolefin resin (A) preferably satisfies the following equation (1)

$$0.1 < Mn/\{(100-M) \times f/M\} < 6 \qquad (1)$$

wherein

f indicates the molecular weight (g/mol) of the compound (a);
M indicates the content (percent by weight) of the compound (a) ; and
Mn indicates the number average molecular weight of the polyolefin resin (A).

In addition, in view of manufacturing stability without causing crosslinking, the range defined by the following equation (2) is more preferable, and the range defined by the following equation (3) is most preferable:

$$0.3 < Mn/\{(100-M) \times f/M\} < 4 \qquad (2)$$

$$0.5 < Mn/\{(100-M) \times f/M\} < 2.5 \qquad (3)$$

If the relationship between the number average molecular weight (Mn) of the polyolefin resin (A) and the compound (a) is in the range described above, when the modified polyolefin (C) resins is manufactured, manufacturing is stably performed without causing crosslinking.

In addition, in the case in which the polyolefin resin (A) is obtained by graft polymerization in the present invention, use of a resin having a high ethylene content, such as a linear low-density polyethylene, as the polyolefin for a graft main chain tends to cause crosslinking in manufacturing as compared to a resin having a high $\alpha$-olefin copolymer content, such as an ethylene-butene copolymer. In order to perform the manufacturing using a resin having a high ethylene content as a graft main chain while suppressing the crosslinking, the number of molecules of the compound (a) present on the molecular chain of the polyolefin resin (A) is preferably controlled close to be singular.

In addition, when the polyolefin as a graft main chain is a resin liable to bedecomposed thermally, such as polypropylene, a viscosity increase phenomenon caused by crosslinking is not likely to occur. Hence, when a resin which is liable to be decomposed thermally is used as a graft main chain, even when the number of molecules of the compound (a) present on the molecular chain of the polyolefin resin (A) is plural, the modified polyolefin (C) may be manufactured in some cases without causing an increase in viscosity.

Incidentally, the number average molecular weight can be obtained by a general molecular weight measurement method used for high-molecular-weight compounds, such as a GPC method, a light scattering method, a low angle light scattering photometric method, a vapor pressure osmotic pressure method, or a membrane osmotic pressure method.

The melt flow rate (MFR) of the polyolefin resin (A) is generally 0.01 to 500 g/10 min and preferably 0.05 to 300 g/10 min as measured at a load of 2.16 kg and at 190°C or 230°C in accordance with ASTM D1238. When the MFR is in the range described above, the modified polyolefin (C) can be obtained with a superior effect of improving the reinforcing properties and dispersibility of the filler.

In addition, the density of the polyolefin resin (A) is generally 0.8 to 1.1 $g/cm^3$, preferably 0.8 to 1.05 $g/cm^3$, and more preferably 0.8 to 1.0 $g/cm^3$.

Compound (B) having a carbodiimide group

The compound (B) having a carbodiimide group used in the present invention is a polycarbodiimide having a repeating unit shown by the following general formula (4) :

$$-N=C=N-R_1- \qquad\qquad (4)$$

wherein $R_1$ indicates a divalent organic group.

A synthetic method of a polycarbodiimide is not particularly limited. For example, a polycarbodiimide can be synthesized by performing a reaction using an organic polyisocyanate in the presence of a catalyst which facilitates a carbodiimidization reaction of an isocyanate group.

A number average molecular weight (Mn), relative to polystyrene, of the compound (B) measured by gel permeation chromatography (GPC) is generally 400 to 500,000, preferably 1,000 to 10,000, and more preferably 2,000 to 4,000. The number average molecular weight (Mn) is preferably in the range described above since the modified polyolefin (C) having a superior effect of improving the reinforcing properties and dispersibility of the filler can be obtained.

The compound (B) may include a monocarbodiimide in a polycarbodiimide, and compounds having a carbodiimide group may be used alone or in combination.

In addition, a commercially available compound having a carbodiimide group may also be used without performing any treatment. As a commercially available compound having a carbodiimide group, for example, Carbodilite HMV-8CA or LA1 (both being trade names) manufactured by Nisshinbo Industries, Inc. may be mentioned.

The carbodiimide group content of the compound (B) and that of the obtained modified polyolefin (C) can be measured, for example, by a $^{13}$C-NMR, an IR, or a titration method and can be obtained as the carbodiimide equivalent. In the $^{13}$C-NMR measurement, a peak can be observed from 130 to 142 ppm, and in the IR measurement, a peak can be observed from 2,130 to 2,140 $cm^{-1}$.

The $^{13}$C-NMR measurement is performed, for example, as described below. That is, 0.35 g of a sample is dissolved in 2.0 ml of hexachlorobutadiene by heating. After this solution is filtrated by a glass filter (G2), 0.5 ml of deuterated benzene is added and is then placed in an NMR tube having an inside diameter of 10 mm. Subsequently, by using a GX-500 NMR measurement apparatus manufactured by JEOL Ltd., $^{13}$C-NMR measurement is performed at 120°C. The number of acquisitions is set to 10,000 or more.

The IR measurement is performed, for example, as described below. That is, after a sample is formed into a thermal press sheet at 250°C for 3 minutes, an infrared absorption spectrum is measured by a transmission method using an infrared spectral photometer (manufactured by JASCO Corporation, FT-IR, 410 model). As the measurement conditions, the resolution is set to 2 cm$^{-1}$, and the number of acquisition is set to 32.

Modified Polyolefin (C)

The modified polyolefin (C) can be obtained by a reaction between the polyolefin resin (A) and the compound (B). Specifically, the modified polyolefin (C) can be obtained by melt kneading such as melt modification. However, the method is not limited thereto.

Hereinafter, the case of melt kneading will be described by way of example. Although a kneading method for performing melt kneading between the polyolefin resin (A) and the compound (B) is not particularly limited, the modified polyolefin (C) can be obtained in such a way that after the polyolefin resin (A) and the compound (B) are simultaneously or sequentially charged into, for example, a Henschel mixer, a V type blender, a tumbler blender, or a ribbon blender, and are mixed together, melt kneading is performed using a single-screw extruder, a multi-screw extruder, a kneader or a Banbury mixer. Among those mentioned above, an apparatus having superior kneading performance, such as a multi-screw extruder, a kneader, or a Banbury mixer, is preferably used since a polymer composition in which dispersion and reaction of each component are more uniformly performed can be obtained.

There may also be used a method in which after the polyolefin resin (A) and the compound (B) are mixed together, the mixture thus obtained is supplied from a hopper or a method in which a component is supplied from a hopper and another component is supplied from a supply port provided at an arbitrary position between the vicinity of a hopper portion and a front end of an extruder.

As the temperature used when the above components are processed by melt kneading, among the melting points of the individual components to be mixed, the highest melting point or more may be used as a temperature for the reaction; however, in particular, melt kneading is generally performed at 150°C to 300°C, preferably 200°C to 280°C, and more preferably 230°C to 270°C.

The modified polyolefin (C) has a superior fluidity at 190°C or 230°C. The melt flow rate (MFR) of the modified polyolefin (C) at 190°C or 230°C and at a load of 2.16 kg is generally 0.01 to 400 g/10 min, preferably 0.1 to 300 g/10 min, and more preferably 1 to 200 g/10 min. When the MFR is in the range described above the reinforcing properties and dispersibility of the filler are preferably superior.

When the modified polyolefin (C) of the present invention is manufactured, the ratio of the number of moles of the compound (a) in the polyolefin resin (A) to the number of moles of the compound (B) is set to a mixing ratio which satisfies the following equation, so that the reaction efficiency between the (a) and the (B) is preferably high, and the modified polyolefin (C) having a superior fluidity can be preferably obtained.

The ratio of the number of moles of the (a) to the number of moles of the (b) is 1: 0.2 to 1.6, preferably 1: 0.4 to 1.3, and more preferably 1: 0.7 to 1.1. In addition, the compound (B) is added in such an amount that the content of the carbodiimide group to 100 g of the modified polyolefin (C) obtained by a reaction between the polyolefin resin (A) and the compound (B) is generally 1 to 200 mmol, preferably 5 to 150 mmol, and more preferably 10 to 100 mmol. When the carbodiimide group content is too low, the reinforcing properties and dispersibility of the filler cannot be obtained. When the content is too high, molding workability may be degraded, and/or the reinforcing properties and dispersibility of the filler may not be improved as expected, and this is uneconomical.

Furthermore, in the modified polyolefin (C) of the present invention, the control of the reaction between a group (a) reactive with a carbodiimide group in the polyolefin resin (A) and the carbodiimide group in the compound (B) having a carbodiimide group is important. The degree of reaction progression between the group (a) in the polyolefin resin (A) and the carbodiimide group in the compound (B) can be investigated, for example, by the following method.

After forming a thermal press sheet of the polyolefin resin (A) and a thermal press sheet of the modified polyolefin (C) obtained by a reaction between the polyolefin resin (A) and the compound (B) respectively, infrared absorption is measured by an infrared absorption analyzer. From a chart obtained thereby, the absorbance of the absorption band (1,790 cm$^{-1}$, when maleic anhydride is used) related to the peak intensity of the polyolefin resin (A) and that of the compound (a) in the modified polyolefin (C) are compared with each other before and after the reaction with the compound (B), so that the reaction rate can be calculated from the following equation:

```
Reaction rate (%)=X/Y×100

X=Difference in intensity of the group reactive with a

carbodiimide group ((A) before reaction - (C) after reaction)
```

7

Y=Intensity of the group reactive with a carbodiimide

group of (A) before reaction

The reaction rate of the modified polyolefin (C) obtained by the method described above is generally 40% to 100%, preferably 60% to 100%, and more preferably 80% to 100%.

In addition, the modified polyolefin (C) is manufactured by a reaction between the carbodiimide group (N=C=N) of the compound (B) and the compound (a) having a group reactive with a carbodiimide group as described above. In the present invention, a certain amount of the carbodiimide group is consumed during a reaction process, a remaining carbodiimide group connected to the polyolefin as a part of the chain thereof interacts with the filler, thereby improving the reinforcing properties and dispersibility thereof. The amount of the remaining carbodiimide group can be obtained by IR measurement from the intensity of the peak caused by the breathing vibration of the N=C=N group present between 2,130 to 2,140 cm$^{-1}$.

The modified polyolefin (C) may contain at least two kinds of the polyolefin resin (A) and may contain at least two kinds of the compound (B).

In addition, the modified polyolefin (C) may also contain a known process stabilizer, heat-resistance stabilizer, heat-aging resistance agent, filler, and the like as long as the object of the present invention is not impaired.

Non-modified polyolefin (D)

As the non-modified polyolefin (D) used in the present invention, a polyolefin similar to that described in the polyolefin main chain of the above (A) may be mentioned by way of example. In addition, the polyolefin (D) may be selected in accordance with its application, purpose, and the kind of filler. For example, there may be mentioned a low-density polyethylene, a high-density polyethylene, a linear-low-density polyethylene, a polypropylene, an ethylene-propylene copolymer, an ethylene-$\alpha$-olefin copolymer, an ethylene-propylene copolymer, an ethylene-butene copolymer, an ethylene-hexene copolymer, an ethylene-octene copolymer, an ethylene/polar group-containing vinyl copolymer, a polybutene-1, a poly-4-methyl-1-pentene, a poly-3-methyl-1-butene, and a cyclic polyolefin such as an ethylene-tetracyclododecene copolymer. Besides the polyolefin mentioned above, for example, an ethylene-propylene-non-conjugated diene copolymer rubber (EPDM) using a non-conjugated diene, such as 5-ethylidene norbornene, 5-methyl norbornene, 5-vinyl norbornene, dicyclopentadiene, or 1,4-pentadiene, as a third component, or an ethylene-propylene-butene terpolymer rubber may be preferably used. Those mentioned above may be used alone or in combination.

Among those mentioned above, when the polyolefin is used at a high temperature of close to 100°C or is used in an application in which the polyolefin is directly brought into contact with a substance which may swell the polyolefin, such as gasoline and oil, a polyolefin having a high melting point or a high crystallinity, such as a polypropylene, a high-density polyethylene, or a linear-low-density polyethylene, is preferably used.

Manufacturing of the polyolefin as described above can be performed by any conventionally known method, and for example, polymerization may be performed using e.g. a titanium-based catalyst, a vanadium-based catalyst or a metallocene catalyst.

In addition, the polyolefin may be either a resin or an elastomer; may have either the isotactic structure or the syndiotactic structure; and the stereoregularity is also not particularly limited. A commercially available resin may also be used without performing any treatment.

As long as the object of the present invention is not impaired, the non-modified polyolefin (D) may contain another mixable resin or polymer.

As the another resin or polymer to bemixed, for example, there may be mentioned a non-modified polyolefin, a vinyl resin, a polystyrene, a polyamide, an acrylic resin, a poly(phenylene sulfide) resin, a poly(ether ether ketone) resin, a polyester, a polysulfone, a poly(phenylene oxide), a polyimide, a poly(ether imide), an acrylonitrile/butadiene/styrene copolymer (ABS), an ethylene/$\alpha$-olefin copolymer rubber, a conjugated diene rubber, a styrene-based rubber, a phenol resin, a melamine resin, a polyester resin, a silicone resin, or an epoxy resin. Those resins may be used alone or in combination. Among those, a styrene-based rubber is preferable, and for specific example of the styrene-based rubber, there may be mentioned a styrene/butadiene/styrene SBS rubber, a styrene/butadiene/butylene/styrene SBBS rubber, and a styrene/ethylene/butylene/styrene SEBS rubber.

composition (E)

The composition (E) can be obtained by a reaction between the polyolefin resin (A) and the compound (B) in the presence of the non-modified polyolefin (D). Specifically, the composition (E) can be obtained by, but not limited to, melt kneading.

Hereinafter, an example for the case of melt kneading will be described. The composition (E) can be obtained in such a way that after the polyolefin resin (A), the compound (B) and the non-modified polyolefin (D) are simultaneously or sequentially charged into, for example, a Henschel mixer, a V type blender, a tumbler blender, or a ribbon blender, and are mixed together, melt kneading is performed using a single-screw extruder, a multi-screw extruder, a kneader or a Banbury mixer. Among those mentioned above, an apparatus having superior mixing performance, such as a multi-screw extruder, a kneader, or a Banbury mixer, is preferably used, from the viewpoint that a polymer composition in which each component are dispersed and reacted more uniformly can be obtained.

Methods used in the present invention may also include a method in which after the polyolefin resin (A), the compound (B), and the non-modified polyolefin (D) are mixed together, the mixture thus obtained is supplied from a hopper, and a method in which at least one component is supplied from a hopper and the other components are supplied from a supply port provided at an arbitrary position between the vicinity of a hopper portion and a front end of an extruder.

The above components may be melt kneaded at a temperature of the highest melting point among the melting points of the individual components to be mixed or higher, however, specifically, melt kneading is generally performed at 150°C to 300°C, preferably 200°C to 280°C, and more preferably 230°C to 270°C.

The composition (E) has a superior fluidity at 190°C or 230°C. The melt flow rate (MFR) of the composition (E) at 190°C or 230°C and at a load of 2.16 kg is generally 0.01 to 400 g/10 min, preferably 0.1 to 300 g/10 min, and more preferably 1 to 200 g/10 min. When the MFR is in the range described above, the reinforcing properties and dispersibility of the filler are superior, and this is preferable.

The composition (E) is a composition which contains generally 10 to 99 parts by weight, preferably 30 to 95 parts by weight, more preferably 50 to 90 parts by weight of the polyolefin resin (A), generally 0.1 to 40 parts by weight, preferably 0.5 to 25 parts by weight, more preferably 1 to 15 parts by weight of the compound (B), and generally 1 to 90 parts by weight, preferably 5 to 70 parts by weight, more preferably 10 to 50 parts by weight of the non-modified polyolefin (D) (where, the total of the (A) and the (D) is set to 100 parts by weight). When the carbodiimide group content is too low, or the content of the non-modified polyolefin is too high, the reinforcing properties and dispersibility of the filler cannot be obtained. When the carbodiimide group content is too high, or the content of the non-modified polyolefin is too low, molding workability may be degraded, and/or the reinforcing properties and dispersibility of the filler may not be improved as expected, and this is not economical.

In addition, if the contents of those are in the range described above, the composition (E) is manufactured in stable condition.

The composition (E) may contain at least two kinds of the polyolefin resin (A), may contain at least two kinds of the compound (B), and may further contain at least two kinds of the non-modified polyolefin (D).

In addition, the composition (E) may also contain, for example, a known process stabilizer, heat-resistance stabilizer, heat-aging resistance agent, or filler, as long as the object of the present invention is not impaired.

Polypropylene-based resin (F)

The polypropylene-based resin (F) used in the present invention is a propylene homopolymer or a propylene/$\alpha$-olefin copolymer and may have e.g. an isotactic structure or a syndiotactic structure. The $\alpha$-olefin content of the propylene/$\alpha$-olefin copolymer is generally 0 to 30 molar percent, preferably 0 to 20 molar percent, and more preferably 0 to 10 molar percent.

Filler (G)

As the filler used in the present invention, an inorganic filler and an organic filler may be mentioned. As the inorganic filler, for example, there may be mentioned silica, diatom earth, alumina, titanium oxide, magnesium oxide, pumice powder, pumice balloon, aluminum hydroxide, magnesium hydroxide, basic magnesium carbonate, dolomite, calcium sulfate, calcium titanate, barium sulfate, calcium sulfite, talc, clay, mica, asbestos, glass fiber, glass flake, glass bead, calcium silicate, montmorillonite, bentonite, boron fiber, carbon fiber, carbon black, carbon nanofiber, aluminum powder, and molybdenum sulfide. Furthermore, there may also be mentioned a filler which is formed by chemically bonding an organic substance to the inorganic filler described above by way of example.

As the organic filler, for example, a fiber, such as an all aromatic polyamide fiber, an aliphatic polyamide fiber, a polyester fiber, or a cellulose fiber, or a finely dispersed liquid-crystal polyester or polyamide may be mentioned. Furthermore, a fiber or a powder obtained from plants by a decomposition treatment may also be mentioned.

In addition, as a filler effective for reinforcing a resin, a carbon fiber may be mentioned, and various conventionally known carbon fibers may be used. For specific example, there may be mentioned a polyacrylonitrile-based, a rayon-based, a pitch-based, a poly(vinyl alcohol)-based, a regenerated cellulose-based, and a mesophase pitch-based carbon fiber.

The fiber diameter of the carbon fiber is preferably 3 to 30 $\mu$m and more preferably 4 to 10 $\mu$m. When the fiber

diameter is excessively small, the fiber may be liable to be fractured, and as a result, the productivity of a reinforced fiber bundle may be degraded in some cases. In addition, when pellets are continuously manufactured, many fibers must be bundled. This causes a complicated work to connect fiber bundles and degradation of the productivity. Such a fiber diameter is not therefore preferable. In addition, in the case in which the pellet length is determined in advance, the excessively large fiber diameter causes a decrease in aspect ratio of the fiber, and this often gives an insufficient reinforcing effect. Such a fiber diameter is not therefore preferable. The aspect ratio is preferably 5 to 6,000. When the aspect ratio is excessively small, the strength may be decreased in some cases, and when the aspect ratio is excessively large, the moldability may be degraded in some cases. The aspect ratio of the carbon fiber can be obtained by an average fiber length/an average fiber diameter using the average fiber diameter and the average fiber length.

As a raw material for a long carbon fiber, a continuous fiber bundle is used. The average fiber diameter thereof is generally 3 to 30 $\mu$m, and the number of bundled filaments is generally 500 to 24,000. The average fiber diameter is preferably 4 to 10 $\mu$m, and the number of bundled filaments is preferably 6,000 to 15,000.

In addition, as the carbon fiber, a chopped strand may also be used. The length of the chopped strand is generally 1 to 20 mm, and the diameter of the fiber is approximately 3 to 30 $\mu$m and preferably 4 to 10 $\mu$m.

The fiber length of the carbon fiber forming the composition of the present invention is generally 0.05 to 200 mm, preferably 0.2 to 50 mm, and more preferably 4 to 20 mm.

The average aspect ratio (fiber length/fiber diameter) is generally 5 to 6,000, preferably 30 to 3,000, and more preferably 100 to 2,000.

The carbon fibers have an approximately equivalent length to each other, such as particularly 2 to 200 mm and preferably 4 to 20 mm, and are preferably disposed in parallel.

The surface of the carbon fiber is preferably processed by a surface treatment, such as oxidizing etching or coating. As examples of the oxidizing etching treatment, an air oxidation treatment, an oxygen treatment, a treatment by an oxidizing gas, a treatment by ozone, a corona treatment, a flame treatment, an (air) plasma treatment, and an oxidizing liquid (nitric acid, an aqueous alkaline metal hypochlorite solution, potassium dichromate-sulfuric acid, or potassium permanganate-sulfuric acid) may be mentioned. As a material for covering the carbon fiber, for example, there may be mentioned carbon, silicon carbide, silicon dioxide, silicon, plasma monomer, ferrocene, or iron trichloride.

As the filler (G) of the present invention, two or more kinds of fillers may also be used.

Filler-reinforced resin composition (H)

The filler-reinforced resin composition (H) used in present invention is a composition containing the polypropylene-based resin (F), the filler (G), and the modified polyolefin (C) or the composition (E) . Specifically, the filler-reinforced resin composition (H) can be obtained by melt kneading. The method for obtaining the composition is not limited thereto.

Hereinafter, an example for the case of melt kneading will be described. The filler-reinforced resin composition (H) can be obtained in such a way that after the polypropylene-based resin (F), the filler (G), and the modified polyolefin (C) or the composition (E) are simultaneously or sequentially charged into, for example, a Henschel mixer, a V type blender, a tumbler blender, or a ribbon blender, and are mixed together, melt kneading is performed using a single-screw extruder, a multi-screw extruder, a kneader or a Banbury mixer. Among those mentioned above, an apparatus having superior mixing performance, such as a multi-screw extruder, a kneader, or a Bunbary mixer, preferably is used from the viewpoint that a polymer composition in which each component are dispersed and reacted more uniformly can be obtained.

Methods used in the present invention may also include a method in which after the polypropylene-based resin (F), the filler (G), and the modified polyolefin (C) or the composition (E) are mixed together, the mixture thus obtained is supplied from a hopper, and a method in which at least one component is supplied from a hopper and the other components are supplied from a supply port provided at an arbitrary position between the vicinity of a hopper portion and a front end of an extruder.

The above components may be melt kneaded at a temperature of the highest melting point among the melting points of the individual components to be mixed or higher; however, specifically, melt kneading is generally performed at 150°C to 300°C and preferably 200°C to 280°C.

As other methods, for example, the following methods may be mentioned; however, the method is not limited thereto.

1) After a predetermined amount of a maleinated polypropylene (hereinafter, polypropylene is referred as "PP" in some cases) and a polycarbodiimide are dry-blended with a PP and a filler, kneading may be performed (simultaneous addition method as disclosed in Japanese Unexamined Patent Application Publication No. 2005-213478 by Idemitsu Kosan Co., Ltd.).

2) After a filler is subjected to immersion treatment using a polycarbodiimide, or the surface of the filler is subjected to coating treatment, the filler treated may be kneaded with PP and a maleinated PP (as a method of the immersion treatment or the coating treatment on the surface, for example, there may be mentioned a method in which the filler surface is covered with a molten polycarbodiimide or a method in which the filler is immersed in a polycarbodiimide solution to coat the filler surface).

3) As in the case described above, after a filler is subjected to immersion treatment using a carbodiimide modified PP (the aid of the present invention itself), or the surface of the filler is subjected to coating treatment, the treated filler may be kneaded with a PP (as a method of the immersion treatment or the coating treatment on the surface, for example, there may be mentioned a method in which the filler surface is covered with a molten carbodiimide modified PP or a method in which the filler is immersed in a carbodiimide modified PP solution obtained by using a good solvent (such as xylene) to coat the filler surface).

4) After a composition of a PP and a carbodiimide modified PP (the aid of the present invention itself) is manufactured in advance, a filler may be covered with this molten resin to form a filler-reinforced resin.

The filler-reinforced resin composition (H) contains generally 0.01 to 50 parts by weight of the (C) or the composition (E) preferably 0.05 to 30 parts by weight, and more preferably 0.1 to 20 parts by weight, which contains generally 20 to 99 parts by weight of polypropylene-based resin (F), preferably 30 to 95 parts by weight, and more preferably 50 to 90 parts by weight, and which contains generally 1 to 80 parts by weight of the filler (G), preferably 5 to 70 parts by weight, and more preferably 10 to 50 parts by weight (where, the total of the (F) and the (G) is set to 100 parts by weight).

In the filler-reinforced resin composition (H), the content of the compound (a) is generally 0.00001 to 4.0 percent by weight, preferably 0.00005 to 3.0 percent by weight, and more preferably 0.0001 to 2.0 percent by weight. In the case described above, the content of the carbodiimide group to 100 g of the filler-reinforced resin composition (H) is generally 0.0001 to 80 mmol, preferably 0.0005 to 60 mmol, and more preferably 0.001 to 40 mmol.

In addition, the content of the compound (a) in the resin composition of the filler-reinforced resin composition (H) is generally 0.00001 to 7.0 percent by weight, preferably 0.00005 to 5.0 percent by weight, and more preferably 0.0001 to 3.0 percent by weight. In the case described above, the content of the carbodiimide group to 100 g of the resin composition of the filler-reinforced resin composition (H) is generally 0.0001 to 140 mmol, preferably 0.0005 to 100 mmol, and more preferably 0.001 to 60 mmol. In addition, the resin composition of the filler-reinforced resin composition (H) can be recovered by melting it for separation.

In the filler-reinforced resin composition (H) obtained by the method as described above, the filler is very preferably dispersed in the polyolefin resin and the adhesion at the interface between the polyolefin resin and the filler is superior. Thus, the balance of mechanical characteristics, such as an impact resistance, a stiffness, and a heat resistance, is superior.

For example, in the case in which the filler (G) of the filler-reinforced resin composition (H) is a carbon fiber, when the ratio thereof is less than 1 part by weight, the reinforcing effect to the resin by the carbon fiber cannot be obtained, and when the ratio is more than 80 parts by weight, the toughness may be lost in some cases.

In addition, in the case in which the filler (G) of the filler-reinforced resin composition (H) is a carbon fiber, a composite material having a strength almost equivalent to that of a carbon-fiber reinforced engineering plastic and capable of realizing weight reduction can be obtained. In addition, this resin composition has advantages, for example, the fluidity thereof in molding is superior, and the resin composition may be preferably used for reducing the wall thickness to give a thinner product.

The filler-reinforced resin composition (H) may include at least two kinds of modified polyolefins (C) or compositions (E) , may include at least two kinds of propylene-based resins (F), and may further include at least two kinds of fillers (G).

In addition, to the filler-reinforced resin composition (H), there may be added, for example, a known softener, tackifier, anti-aging agent, process aid, adhesive, heat resistant stabilizer, weather resistant stabilizer, antistatic agent, coloring agent, lubricant, flame retardant, bloom inhibitor, as long as the object of the present invention is not impaired.

Molded article (I)

A molded article (I) is obtained by molding the filler-reinforced resin composition (H) itself or with a diluent added thereto by dry blending. As a molding method, any known method may be used. Specifically, the molded article (I) can be manufactured by e.g. injection molding, blow molding press molding, calendar molding, extrusion molding or stamping mold molding. By extrusion molding, a sheet, a film (non-stretched), a pipe, a tube, a wire, and the like can be molded. In particular, an injection molding method and a press molding method are preferable.

A stretched film may be manufactured by e.g. processing an extruded sheet or an extruded film (non-stretched) as described above by a tenter method (longitudinal/lateral stretching, lateral/longitudinal stretching), a simultaneous biaxial stretching method or a uniaxial stretching method, and an inflation film may also be manufactured.

Filaments may be manufactured, for example, by extruding a molten composition through spinnerets.

An injection molded article can be manufactured, for example, by injecting a composition under known conditions using a conventionally known injection molding machine, so that molded articles having various shapes can be obtained.

A blow-molded article can be manufactured under known conditions using a conventionally known blow molding machine.

As a press molded article, a mold stamping molded article may be mentioned.

The filler remaining after the molding preferably maintains its shape in a process for manufacturing the filler-reinforced resin composition (H) and the molded article (I). For example, in the case of a carbon fiber, when the weight average fiber length thereof after the molding is generally 0.01 mm or more, preferably 0.1 mm or more, and more preferably 1 mm or more, an effect of improving astiffness, an impact resistance, a durability, and the like can be obtained.

The molded articles obtained by the methods as described above can be widely used from household articles to industrial goods. As the molded articles obtained by the methods described above, for example, electrical components, electronic components, automobile components, mechanical mechanism components, food containers, films, sheets, and fibers may be mentioned. More specifically, for example, there may be mentioned business machines and office automation equipments, such as a printer, a personal computer, a word processor, a keyboard, a PDA (personal digital assistant), a phone, a facsimile, a copying machine, an ECR (electronic cash register), an electronic calculator, an electronic notebook, an electronic dictionary, a card, a holder, and a stationery; home appliances, such as a washing machine, a refrigerator, a vacuum cleaner, a microwave oven, a lightning apparatus, a game machine, an electrical iron, and a Japanese style heating appliance called kotatsu in Japanese; AV apparatuses, such as a television, a video tape recorder, a video camera, a radio-cassette recorder, a tape recorder, a mini disc, a CD player, a speaker, and a liquid crystal display; and electrical/electronic components and communication apparatuses, such as a connector, a relay, a capacitor, a switch, a printed circuit board, a coil bobbin, a semiconductor packaging material, an electrical wire, a cable, a transformer, a deflection yoke, a distribution board, and a watch.

In addition, for example, there may also be mentioned automobile, vehicle, ship, airplane, and building materials, such as a seat (such as a filler or an outer material), a belt, a ceiling covering, a convertible top, an arm rest, a door trim, a rear package tray, a carpet, a mat, a sun visor, a wheel cover, a tire, a mattress cover, an air bag, an insulating material, a hand grasp, a hand strap, a wire covering material, an electrically insulating material, a paint, a coating material, a top layer lining material, a floor material, a corner wall, a deck panel, a cover and the like, a plywood, a ceiling board, a partition board, a side wall, a carpet, wallpaper, a wall covering material, an exterior material, an interior material, a roof material, an acoustic insulating material, a heat insulating material, and a window material; and living and sporting goods, such as clothing, a curtain, a sheet, a plywood, a synthetic fiber board, a rug, a doormat, a sheet, a bucket, a hose, a container, a pair of glasses, a bag, a case, goggles, skis, a racket, a tent, and a musical instrument.

Furthermore, for example, there may also be mentioned bottles for e.g. a shampoo or a detergent; condiment bottles for e.g. a food oil or a soy sauce; beverage bottles for e.g. mineral water or juice; heat-resistant food containers, such as a lunch box and a bowl for steamed egg hotchpotch; dinnerware, such as a dish and chopsticks; other various food containers; packaging films, and packaging bags.

Examples

Hereinafter, the present invention will be described in more detail with reference to Examples and Comparative Examples; however, as long as the present invention is within the scope thereof, the present invention is not restricted to the following Examples.

(Individual measurement methods)

Measurements were performed in accordance with the following methods.

[Melt flow rate (MFR)]

In accordance with ASTM D1238, the measurement was performed at 190°C or 230°C and at a load of 2.16.

[Number average molecular weight (Mn)]

The number average molecular weight (Mn) was measured by gel permeation chromatography (GPC). The measurement was performed as described below using a gel permeation chromatograph, Alliance GPC-2000 system, manufactured by Waters Corporation. As separation columns, two TSKgel GMH6-HT columns and two TSKgel GMH6-HTL columns were used; the column sizes thereof were each 7.5 mm in diameter and 300 mm in length; the column temperature was set to 140°C; o-dichlorobenzene (manufactured by Wako Pure Chemical Industries, Ltd.) was used as a mobile phase, 0.025 percent by weight of BHT (manufactured by Takeda Pharmaceutical Co., Ltd.) was used as an antioxidant, and the mobile phase was moved at 1.0 ml/min; the sample concentration was set to 15 mg/10 mL; the injection volume of the sample was set to 500 microliter; and as a detector, a differential refractometer was used. As the standard polystyrene, polystyrenes having an Mw of less than 1,000 and an Mw of more than $4 \times 10^6$ which were manufactured by Tosoh Corporation were used, and a polystyrene having an Mw in the range from 1,000 to $4 \times 10^6$ which were manufactured by Pressure Chemical Company was used. For a maleic anhydride modified polypropylene, calculation was performed by polypropylene conversion.

[Carbodiimide group content]

The carbodiimide group content was obtained in such a way that after a sample was formed into a thermal press sheet at 250°C for 3 minutes, the measurement of an infrared spectrum was performed by a transmission method using an infrared spectrophotometer (manufactured by JASCO Corporation, FT-IR 410 model). As the measurement conditions, the resolution was set to 2 cm$^{-1}$, and the number of acquisition was set to 32.

[Density (D)]

The density (D) was obtained by measuring the density of a part of an obtained molded article using a density gradient tube.

[Izod impact strength (IZOD)]

In accordance with ASTM D256, the measurement was performed at 23°C using injection molded test pieces each having a thickness of 1/8 inches (with a molded notch and a cut notch).

[Flexural strength (FS), Flexural modulus (FM)]

A 3-point flexural test was performed using an injection-molded test piece having a length of 2.5 inches, a width of 1/2 inches, and a thickness of 1/8 inches at 23°C, at a span of 48 mm, and a compression rate of 5 mm/min.

[Heat distortion temperature (HDT)]

In accordance with ASTM D648, the measurement was performed using an injection-molded test piece having a thickness of 1/8 inches at a load of 9.6 kg/cm$^2$.

(Used polyolefin)

Polyolefins used in Examples and Comparative Examples are shown below. Unless otherwise particularly stated, the used olefins were all commercially available products.

PP1: polypropylene (random PP)
(trade name: F327, manufactured by Prime Polymer Co., Ltd., MFR (230°C): 7 g/10 min)
PP2: polypropylene (homo PP)
(trade name: J106G, manufactured by Prime Polymer Co., Ltd., MFR (230°C): 15 g/10 min)
E/GMA: ethylene/glycidyl methacrylate copolymer
(trade name: Bond Fast E, manufactured by Sumitomo Chemical Co., Ltd., MFR (190°C): 3 g/10 min, glycidyl methacrylate content: 12 percent by weight)

(Used carbon fiber)

Carbon fibers used in Examples and Comparative Examples are shown below. Unless otherwise particularly stated, the used carbon fibers were all PAN-based chopped fibers (fiber length: 6 mm, fiber diameter: 6 μm) manufactured by Toho Tenax Co., Ltd.

CF1: trade name HTA-C6-S
CF2: trade name HTA-C6-NR
CF3: trade name HTA-C6-UH

(Example 1)

<Manufacturing of a polyolefin resin (A) including a group reactive with a carbodiimide group>

With 100 parts by weight of PP1 (manufactured by Prime Polymer Co., Ltd., F327), 1 part by weight of maleic anhydride (manufactured by Wako Pure Chemical Industries Ltd., hereinafter abbreviated as "MAH"), 0.25 parts by weight of 2,5-dimethyl-2,5-bis(tert-butylperoxy)hexyne-3 (manufactured by NOF Corporation, trade name: Perhexyne 25B) were mixed. The mixture thus obtained was then extruded using a biaxial kneading machine (manufactured by Japan Steel Works, Ltd., TEX-30, L/D=40, using a vacuum vent) at a cylinder temperature of 220°C, a screw rotation speed of 200 rpm, and an extrusion rate of 80 g/min, giving a maleic acid modified polypropylene (hereinafter abbreviated as "MAH-PP1). After the MAH-PP1 obtained was dissolved in xylene, this xylene solution thus obtained was poured to acetone, so that MAH-PP1 was purified by re-precipitation. The grafted amount of maleic anhydride measured by IR was 0.7 percent by weight, and the number average molecular weight (Mn) measured by a GPC was 28,000.

In addition, as for MAH-PP1, the value of Mn/{(100-M) × f/M} was 2.0.

(In the equation,

f indicates the molecular weight of maleic anhydride, 98 (g/mol);
M indicates the content of maleic anhydride, 0.7 (percent by weight); and
Mn indicates the number average molecular weight of MAH-PP1, 28,000.)

<Manufacturing of a modified polyolefin (C)>

With 100 parts by weight of MAH-PP1 manufactured as described above, 8.8 parts by weight of a compound including a carbodiimide group (manufactured by Nisshinbo Industries, trade name: Carbodilite HMV-8CA, the equivalent of the carbodiimide group: 278, the number average molecular weight: 2,500) was mixed. The mixture thus obtained was then extruded using a biaxial kneading machine (manufactured by Japan Steel Works, Ltd., TEX-30, L/D=40, using a vacuum vent) at a cylinder temperature of 250°C, a screw rotation speed of 200 rpm, and an extrusion rate of 80 g/min, so that an aid for filler-reinforced resins (hereinafter abbreviated as "CDI-PP1") was obtained. The CDI-PP1 thus obtained had an MFR (230°C, a load of 2.16 kg) of 130 g/10 min. In addition, the result of IR analysis showed that the peak of maleic acid disappeared, namely the reaction rate was 100%, and the carbodiimide group content was 27 mmol/100 g.

<Manufacturing of a filler-reinforced resin composition (H)>

With 0.5 parts by weight of CDI-PP1 manufactured as described above, 80 parts by weight of PP2 (manufactured by Prime Polymer Co., Ltd., J106G) and 20 parts by weight of CF1 were mixed. The mixture thus obtained was then extruded using a biaxial kneading machine (manufactured by Technovel Corporation, KZW-15, L/D=30) at a cylinder temperature of 230°C, a screw revolution of 200 rpm, and an extrusion rate of 30 g/min, giving a filler-reinforced resin composition. The composition for forming the filler-reinforced resin composition is shown in Table 1.

<Manufacturing of a molded article (I) by molding the filler-reinforced resin composition (H)>

Injection molding of the filler-reinforced resin composition (H) manufactured as described above was performed using an injection molding machine (manufactured by Nissei Plastic Industrial Co., Ltd., PS20E5ASE) at a cylinder temperature of 230°C and a mold temperature of 40°C, and IZOD, FS, FM, and HDT of the molded articles were measured. The measurement results thereof are shown in Table 1.

(Examples 2 and 3)

Except that the amount of CDI-PP1 was changed to 1 or 5 parts by weight, filler-reinforced resin compositions (H) were manufactured in the same manner as in Example 1, and injection molding thereof and characteristic measurements of the molded articles (I) were performed. The measurement results thereof are shown in Table 1.

(Examples 4 to 6)

Except that the carbon fibers were changed to CF2, filler-reinforced resin compositions (H) were manufactured in the same manners as in Examples 1 to 3, and injection molding thereof and characteristic measurements of the molded articles (I) were performed. The measurement results thereof are shown in Table 1.

(Example 7)

Except that the amount of CDI-PP1 was changed to 1 part by weight, and that the carbon fiber was changed to CF3, a filler-reinforced resin composition (H) was manufactured in the same manner as in Example 1, and injection molding thereof and characteristic measurements of the molded article (I) were performed. The measurement results thereof are shown in Table 1.

(Example 8)

Except that the amount of CDI-PP1 was changed to 2 parts by weight, the amount of PP2 was changed to 90 parts by weight, and the amount of CF1 was changed to 10 parts by weight, a filler-reinforced resin composition (H) was manufactured in the same manner as in Example 1, and injection molding thereof and characteristic measurements of the molded article (I) were performed. The measurement results thereof are shown in Table 2.

(Example 9)

Except that the amount of CDI-PP1 was changed to 5 parts by weight, a filler-reinforced resin composition (H) was manufactured in the same manner as in Example 8, and injection molding thereof and characteristic measurements of the molded article (I) were performed. The measurement results thereof are shown in Table 2.

(Example 10)

Except that the amount of PP2 was changed to 70 parts by weight, and that the amount of CF1 was changed to 30 parts by weight, a filler-reinforced resin composition (H) was manufactured in the same manner as in Example 8, and injection molding thereof and characteristic measurements of the molded article (I) were performed. The measurement results thereof are shown in Table 2.

(Example 11)

Except that the amount of CDI-PP1 was changed to 5 parts by weight, a filler-reinforced resin composition (H) was manufactured in the same manner as in Example 10, and injection molding thereof and characteristic measurements of the molded article (I) were performed. The measurement results thereof are shown in Table 2.

(Example 12)

Except that the amount of CDI-PP1 was changed to 10 parts by weight, a filler-reinforced resin composition (H) was manufactured in the same manner as in Example 10, and injection molding thereof and characteristic measurements of the molded article (I) were performed. The measurement results thereof are shown in Table 2.

(Comparative Example 1)

Except that the addition of the aid for filler-reinforced resins of Example 1 was not performed, a filler-reinforced resin composition (H) was manufactured in the same manner as in Example 1, and injection molding thereof and characteristic measurements of the molded article (I) were performed. The measurement results thereof are shown in Table 3.

(Comparative Example 2)

Except that 1 part by weight of MAH-PP1 was used instead of 0.5 parts by weight of CDI-PP1 as the aid for filler-reinforced resins, a filler-reinforced resin composition was manufactured in the same manner as in Example 1, and injection molding thereof and characteristic measurements of the molded article were performed. The measurement results thereof are shown in Table 3.

(Comparative Example 3.)

Except that 1 part by weight of E/GMA was used instead of 0.5 parts by weight of CDI-PP1 as the aid for filler-reinforced resins, a filler-reinforced resin composition was manufactured in the same manner as in Example 1, and injection molding thereof and characteristic measurements of the molded article were performed. The measurement results thereof are shown in Table 3.

(Comparative Example 4)

Except that 0.5 parts by weight of MAH and 0.3 parts by weight of Perhexyne 25B were mixed together, and that the cylinder temperature of the biaxial kneading machine was set to 230°C, a maleic acid-modified polypropylene was obtained in the same manner as in Example 1. The result of IR measurement showed that the grafted amount of maleic anhydride of this maleic acid-modified polymer was 0.3 percent by weight. Subsequently, 100 parts by weight of this maleic acid-modified polypropylene and 6.2 parts by weight of 4,9-dioxadodecane-1,12-diamine were mixed together. This mixture was then subjected to a biaxial kneading machine at a cylinder temperature of 230°C, giving an amino group-containing polypropylene (hereinafter abbreviated as "DA-PP").

Except that the aid for filler-reinforced resins was changed to 1 part by weight of DA-PP, a filler-reinforced resin composition was manufactured in the same manner as in Example 1, and injection molding thereof and characteristic measurements of the molded article were performed. The measurement results thereof are shown in Table 3.

(Comparative Examples 5 to 8)

Except that the carbon fibers were changed to CF2, filler-reinforced resin compositions were manufactured in the same manners as in Comparative Examples 1 to 4, and injection molding thereof and characteristic measurements of the molded articles were performed. The measurement results thereof are shown in Table 3.

(Comparative Example 9)

Except that the carbon fiber was changed to CF3, a filler-reinforced resin composition was manufactured in the same manner as in Comparative Example 1, and injection molding thereof and characteristic measurements of the molded article were performed. The measurement results thereof are shown in Table 4.

(Comparative Example 10)

Except that the carbon fiber was changed to CF3, a filler-reinforced resin composition was manufactured in the same manner as in Comparative Example 3, and injection molding thereof and characteristic measurements of the molded article were performed. The measurement results thereof are shown in Table 4.

(Comparative Example 11)

Except that the carbon fiber was changed to CF3, a filler-reinforced resin composition was manufactured in the same manner as in Comparative Example 4, and injection molding thereof and characteristic measurements of the molded article were performed. The measurement results thereof are shown in Table 4.

(Comparative Example 12)

Except that 0.05 parts by weight of MAH and 0.02 parts by weight of Perhexyne 25B were mixed together, and that the cylinder temperature of the biaxial kneading machine was set to 260°C, a maleic acid-modified polypropylene (hereinafter abbreviated as "MAH-PP2") was obtained in the same manner as in Example 1. The result of IR measurement showed that the grafted amount of maleic anhydride of this obtained MAH-PP2 was 0.03 percent by weight. The result of GPC measurement showed that the number average molecular weight (Mn) was 29,000.

In addition, the value of $Mn/\{(100-M) \times f/M\}$ for MAH-PP2 was 0.09.
(In the equation,

f indicates the molecular weight of maleic anhydride, 98 (g/mol);
M indicates the content of maleic anhydride, 0.03 (percent by weight); and
Mn indicates the number average molecular weight of MAH-PP2, 29,000.)

As in Example 1, 100 parts by weight of MAH-PP2 manufactured as described above and 0.25 parts by weight of a compound including a carbodiimide group were mixed together, and the mixture was extruded by a biaxial kneading machine, giving an aid for filler-reinforced resins (hereinafter abbreviated as "CDI-PP2"). The carbodiimide group content of CDI-PP2 thus obtained was 0.09 mmol/100 g.

Except that the aid for filler-reinforced resins was changed to 1 part by weight of CDI-PP2, a filler-reinforced resin composition was manufactured in the same manner as in Example 1, and injection molding thereof and characteristic measurements of the molded article were performed. The measurement results thereof are shown in Table 4.

(Comparative Example 13)

Except that 100 parts by weight of PP2, 30 parts by weight of MAH, and 5 parts by weight of dicumyl peroxide (manufactured by NOF Corporation, trade name: Percumyl D) were mixed together, and a reaction was performed in a toluene solution for 5 hours, a maleic acid-modified polypropylene (hereinafter abbreviated as MAH-PP3) was obtained in the same manner as in Example 1. The result of IR measurement showed that the grafted amount of maleic anhydride of this obtained MAH-PP3 was 5.0 percent by weight. The result of GPC measurement showed that the number average molecular weight (Mn) was measured by a GPC, Mn was 18,000.
In addition, the value of $Mn/\{(100-M)\times f/M\}$ for MAH-PP3 was 10.
(In the equation,

f indicates the molecular weight of maleic anhydride, 98 (g/mol);
M indicates the content of maleic anhydride, 5.0 (percent by weight); and
Mn indicates the number average molecular weight of MAH-PP2, 18,000.)

As in Example 1, 100 parts by weight of MAH-PP3 manufactured as described above and 150 parts by weight of a compound including a carbodiimide group were mixed together, and the mixture was extruded by a biaxial kneading machine, giving an aid for filler-reinforced resins (hereinafter abbreviated as "CDI-PP3"). The extruded resin slightly gelled. The carbodiimide group content of CDI-PP3 thus obtained was 220 mmol/100 g.
Except that the aid for filler-reinforced resins was changed to 1 part by weight of CDI-PP3, a filler-reinforced resin composition was manufactured in the same manner as in Example 1, and injection molding thereof and characteristic measurements of the molded article were performed. The measurement results thereof are shown in Table 4.

(Comparative Example 14)

Except that CDI-PP1 was not used as the aid for filler-reinforced resins, a filler-reinforced resin composition was manufactured in the same manner as in Example 8, and injection molding thereof and characteristic measurements of the molded article were performed. The measurement results thereof are shown in Table 4.

(Comparative Example 15)

Except that CDI-PP1 was not used as the aid for filler-reinforced resins, a filler-reinforced resin composition was manufactured in the same manner as in Example 10, and injection molding thereof and characteristic measurements of the molded article were performed. The measurement results thereof are shown in Table 4.
The results shown in Table 1 shows that when CDI-PP1 was used as the aid for filler-reinforced resins, IZOD, FS, FM, and HDT were all improved as compared to those in the case in which the aid was not added.
Furthermore, the results of Examples in which CDI-PP1 was added showed that a reaction with a surface functional group of the carbon fiber gives a strong bond formed between the carbon fiber and the polypropylene, and thereby IZOD, FS, FM, and HDT were all improved as compared to those in Comparative Examples in which MAH-PP1, E/GMA, and DA-PP were added.
The result of Comparative Example using CDI-PP2 shows that since the value of $Mn/\{(100-M)\times f/M\}$ of MAH-PP2 which was a raw material thereof was as low as 0.09, and the carbodiimide group content in CDI-PP2 manufactured in accordance with the content of the grafted MAH was as low as 0.09 mmol/100 g, IZOD, FS, FM, and HDT were all not improved.
As for CDI-PP3, the value of $Mn/\{(100-M)\times f/M\}$ of MAH-PP3 which was a raw material thereof was as high as 10, and manufacturing was performed by adjusting the compound including a carbodiimide group so as to suppress gelation as low as possible; however, manufacturing was not easily carried out due to occurrence of slight gelation and the like. The result shows that CDI-PP3 did not improve all of IZOD, FS, FM, and HDT.
[Table 1]

Table 1

| COMPOSITION (PARTS BY WEIGHT) | | COMPONENT | NAME OF COMPOUND (TRADE NAME) | EXAMPLE 1 | EXAMPLE 2 | EXAMPLE 3 | EXAMPLE 4 | EXAMPLE 5 | EXAMPLE 6 | EXAMPLE 7 |
|---|---|---|---|---|---|---|---|---|---|---|
| COMPOSITION (PARTS BY WEIGHT) | (C) | CDI-PP1 | CARBODIIMIDE GROUP-CONTAINING PP | 0.5 | 1 | 5 | 0.5 | 1 | 5 | 1 |
| COMPOSITION (PARTS BY WEIGHT) | (C) | CDI-PP2 | CARBODIIMIDE GROUP-CONTAINING PP | | | | | | | |
| COMPOSITION (PARTS BY WEIGHT) | (C) | CDI-PP3 | CARBODIIMIDE GROUP-CONTAINING PP | | | | | | | |
| COMPOSITION (PARTS BY WEIGHT) | (C) | MAH-PP1 | MALEIC ANHYDRIDE GROUP-CONTAINING PP | | | | | | | |
| COMPOSITION (PARTS BY WEIGHT) | (C) | E/GMA | E·GMA COPOLYMER (BOND FAST E) | | | | | | | |
| COMPOSITION (PARTS BY WEIGHT) | (C) | DA-PP | AMINO GROUP-CONTAINING PP | | | | | | | |
| COMPOSITION (PARTS BY WEIGHT) | (F) | PP2 | HOMO PP (J106G) | 80 | 80 | 80 | 80 | 80 | 80 | 80 |
| COMPOSITION (PARTS BY WEIGHT) | (G) | CF1 | CARBON FIBER (HTA-C6-S) | 20 | 20 | 20 | | | | |
| COMPOSITION (PARTS BY WEIGHT) | (G) | CF2 | CARBON FIBER (HTA-C6-NR) | | | | 20 | 20 | 20 | |
| COMPOSITION (PARTS BY WEIGHT) | (G) | CF3 | CARBON FIBER (HTA-C6-UH) | | | | | | | 20 |
| CHARACTERISTICS | | ITEM | UNIT | | | | | | | |
| CHARACTERISTICS | | D | kg/m$^3$ | 980 | 991 | 979 | 982 | 988 | 986 | 983 |
| CHARACTERISTICS | | IZOD WITH MOLDED NOTCH | J/m | 41 | 68 | 119 | 43 | 54 | 127 | 70 |
| CHARACTERISTICS | | IZOD WITH CUT NOTCH | J/m | 32 | 36 | 56 | 34 | 35 | 62 | 38 |
| CHARACTERISTICS | | FS | MPa | 106 | 126 | 143 | 99 | 124 | 148 | 122 |
| CHARACTERISTICS | | FM | MPa | 8280 | 8270 | 8240 | 7860 | 8260 | 8460 | 8390 |
| CHARACTERISTICS | | HDT | °C | 158 | 158 | 158 | 157 | 158 | 158 | 158 |

[Table 2]

Table 2

| | | COMPONENT | NAME OF COMPOUND (TRADE NAME) | EXAMPLE 8 | EXAMPLE 9 | EXAMPLE 10 | EXAMPLE 11 | EXAMPLE 12 |
|---|---|---|---|---|---|---|---|---|
| COMPOSITION (PARTS BY WEIGHT) | (C) | CDI-PP1 | CARBODIIMIDE GROUP-CONTAINING PP | 2 | 5 | 2 | 5 | 10 |
| | | CDI-PP2 | | | | | | |
| | | CDI-PP3 | | | | | | |
| | | MAH-PP1 | MALEIC ANHYDRIDE GROUP-CONTAINING PP | | | | | |
| | | E/GMA | E·GMA COPOLYMER (BOND FAST E) | | | | | |
| | | DA-PP | AMINO GROUP-CONTAINING PP | | | | | |
| | (F) | PP2 | HOMO PP (J106G) | 90 | 90 | 70 | 70 | 70 |
| | (G) | CF1 | CARBON FIBER (HTA-C6-S) | 10 | 10 | 30 | 30 | 30 |
| | | CF2 | CARBON FIBER (HTA-C6-NR) | | | | | |
| | | CF3 | CARBON FIBER (HTA-C6-UH) | | | | | |
| CHARACTERISTICS | ITEM | | UNIT | | | | | |
| | D | | kg/m$^3$ | 948 | 946 | 1041 | 1034 | 1030 |
| | IZOD WITH MOLDED NOTCH | | J/m | 53 | 75 | 39 | 87 | 124 |
| | IZOD WITH CUT NOTCH | | J/m | 32 | 44 | 33 | 45 | 64 |
| | FS | | MPa | 98 | 106 | 102 | 147 | 155 |
| | FM | | MPa | 4810 | 4810 | 11580 | 11530 | 11240 |
| | HDT | | °C | 142 | 142 | 162 | 162 | 162 |

[Table 3]

Table 3

| | COMPONENT | NAME OF COMPOUND (TRADE NAME) | Comparative EXAMPLE 1 | Comparative EXAMPLE 2 | Comparative EXAMPLE 3 | Comparative EXAMPLE 4 | Comparative EXAMPLE 5 | Comparative EXAMPLE 6 | Comparative EXAMPLE 7 | Comparative EXAMPLE 8 |
|---|---|---|---|---|---|---|---|---|---|---|
| COMPOSITION (PARTS BY WEIGHT) | (C) CDI-PP1 | CARBODIIMIDE GROUP-CONTAINING PP | | | | | | | | |
| | CDI-PP2 | | | | | | | | | |
| | CDI-PP3 | | | | | | | | | |
| | MAH-PP1 | MALEIC ANHYDRIDE GROUP-CONTAINING PP | | 1 | | | | 1 | | |
| | E/GMA | E-GMA COPOLYMER (BOND FAST E) | | | 1 | | | | 1 | |
| | DA-PP | AMINO GROUP-CONTAINING PP | | | | 1 | | | | 1 |
| | (F) PP2 | HOMO PP (J106G) | 80 | 80 | 80 | 80 | 80 | 80 | 80 | 80 |
| | (G) CF1 | CARBON FIBER (HTA-C6-S) | 20 | 20 | 20 | 20 | | | | |
| | CF2 | CARBON FIBER (HTA-C6-NR) | | | | | 20 | 20 | 20 | 20 |
| | CF3 | CARBON FIBER (HTA-C6-UH) | | | | | | | | |
| CHARACTERISTICS | ITEM | UNIT | | | | | | | | |
| | D | kg/m³ | 982 | 984 | 980 | 983 | 986 | 990 | 990 | 989 |
| | IZOD WITH MOLDED NOTCH | J/m | 39 | 33 | 35 | 31 | 39 | 36 | 38 | 34 |
| | IZOD WITH CUT NOTCH | J/m | 28 | 27 | 27 | 27 | 29 | 29 | 29 | 29 |
| | FS | MPa | 64 | 73 | 67 | 70 | 67 | 76 | 68 | 74 |
| | FM | MPa | 8110 | 8040 | 7900 | 8030 | 7560 | 7830 | 7530 | 7600 |
| | HDT | °C | 138 | 156 | 153 | 155 | 144 | 156 | 153 | 155 |

[Table 4]

Table 4

| COMPOSITION (PARTS BY WEIGHT) | | COMPONENT | NAME OF COMPOUND (TRADE NAME) | Comparative EXAMPLE 9 | Comparative EXAMPLE 10 | Comparative EXAMPLE 11 | Comparative EXAMPLE 12 | Comparative EXAMPLE 13 | Comparative EXAMPLE 14 | Comparative EXAMPLE 15 |
|---|---|---|---|---|---|---|---|---|---|---|
| | (C) | CDI-PP1 | CARBODIIMIDE GROUP-CONTAINING PP | | | | | | | |
| | | CDI-PP2 | | | | | 1 | | | |
| | | CDI-PP3 | | | | | | 1 | | |
| | | MAH-PP1 | MALEIC ANHYDRIDE GROUP-CONTAINING PP | | | | | | | |
| | (F) | E/GMA | E-GMA COPOLYMER (BOND FAST E) | | 1 | | | | | |
| | (G) | DA-PP | AMINO GROUP-CONTAINING PP | | | 1 | | | | |
| | | PP2 | HOMO PP (J106G) | 80 | 80 | 80 | 80 | 80 | 90 | 70 |
| | | CF1 | CARBON FIBER (HTA-C6-S) | | | | 20 | 20 | 10 | 30 |
| | | CF2 | CARBON FIBER (HTA-C6-NR) | | | | | | | |
| | | CF3 | CARBON FIBER (HTA-C6-UH) | 20 | 20 | 20 | | | | |

| CHARACTERISTICS | | ITEM | UNIT | Comparative EXAMPLE 9 | Comparative EXAMPLE 10 | Comparative EXAMPLE 11 | Comparative EXAMPLE 12 | Comparative EXAMPLE 13 | Comparative EXAMPLE 14 | Comparative EXAMPLE 15 |
|---|---|---|---|---|---|---|---|---|---|---|
| | | D | kg/m³ | 986 | 986 | 985 | 988 | 990 | 949 | 1042 |
| | | IZOD WITH MOLDED NOTCH | J/m | 34 | 60 | 38 | 38 | 37 | 34 | 37 |
| | | IZOD WITH CUT NOTCH | J/m | 28 | 32 | 27 | 28 | 28 | 23 | 31 |
| | | FS | MPa | 68 | 111 | 84 | 71 | 74 | 62 | 62 |
| | | FM | MPa | 7550 | 7190 | 7600 | 7860 | 7990 | 4790 | 11210 |
| | | HDT | °C | 156 | 156 | 155 | 156 | 154 | 137 | 160 |

Industrial Applicability

According to the present invention, a modified polyolefin obtained by a reaction between a polyolefin resin (A) including a group reactive with a carbodiimide group and a compound (B) including a carbodiimide group is useful as an aid for filler-reinforced resins, and improves the reinforcing properties and dispersibility of the filler in a filler-reinforced resin composition.

When this filler-reinforced resin composition is molded, the molded article of the present invention is obtained with superior mechanical characteristics, such as an impact resistance and a flexural strength.

Although the application of the molded article of the present invention is not particularly limited, in particular, the molded article may be suitably used for applications in which e.g. rigidity, impact resistance and durability are required, such as an automobile component, a building material-related component, and an electrical tool component.

**Claims**

1. A molded article (I) obtained by molding a filler-reinforced resin composition (H) comprising

     (i) 0.01-50 pbw of a modified polyolefin (C) or a composition (E);
     (ii) 20-99 pbw of a polypropylene-based resin (F); and
     (iii) 1-80 pbw of a filler (G)

   per 100 pbw of the total of (F) and (G).
   wherein the modified polyolefin (C) is obtained by reacting
   a polyolefin resin (A) having a group reactive with a carbodiimide group and
   a compound (B) having a carbodiimide group,
   and having a carbodiimide group content of 1-200 mmol per 100 g of the modified polyolefin as determined by infrared spectroscopy, and
   wherein the composition (E) is obtained by reacting the polyolefin resin (A) and the compound (B) in the presence of a non-modified polyolefin (D), and
   wherein the filler (G) includes a carbon fiber.

2. The article of claim 1, wherein the polyolefin resin (A) satisfies the relationship

$$0.1 < Mn/\{(100-M) \times f/M\} < 6 \qquad (1)$$

   wherein

     $f$ is the molecular weight (g/mol) of a compound (a) having a group reactive with a carbodiimide group;
     $M$ is the content (wt.-%) of the compound (a) having a group reactive with a carbodiimide group; and
     $Mn$ is the number average molecular weight of the polyolefin resin (A).

3. The article of claim 1, wherein the polyolefin resin (A) has a maleic acid group.

4. The article of claim 1, wherein the carbodiimide group content is 0.0001-140 mmol per 100 g of the resin component thereof.

**Patentansprüche**

1. Formkörper (I) erhalten durch Formen einer füllstoffverstärkten Harzzusammensetzung (H) umfassend

     (i) 0,01 bis 50 Gewichtsteile eines modifizierten Polyolefins (C) oder einer Zusammensetzung (E);
     (ii) 20 bis 99 Gewichtsteile eines Harzes (F) auf Basis von Polypropylen und
     (iii) 1 bis 80 Gewichtsteile eines Füllstoffs (G)

   pro 100 Gewichtsteile der Gesamtmenge von (F) und (G), worin das modifizierte Polyolefin (C) erhalten wird, indem

ein Polyolefinharz (A) mit einer Gruppe, die gegenüber einer Carbodiimidgruppe reaktiv ist, und eine Verbindung (B) mit einer Carbodiimidgruppe umgesetzt wird, und wobei es einen Carbodiimidgruppengehalt von 1 bis 200 mmol pro 100 g des modifizierten Polyolefins, bestimmt durch Infrarotspektroskopie aufweist, und wobei die Zusammensetzung (E) erhalten wird, indem das Polyolefinharz (A) und die Verbindung (B) in Gegenwart eines nicht-modifizierten Polyolefins (D) umgesetzt werden und wobei der Füllstoff (G) eine Kohlefaser umfasst.

2.  Körper gemäß Anspruch 1, worin das Polyolefinharz (A) die Beziehung

$$0,1 < Mn/\{100-M)xf/M\} < 6 \qquad (1)$$

worin

f das Molekulargewicht (g/mol) der Verbindung (a), die eine Gruppe aufweist, die gegenüber einer Carbodiimidgruppe reaktiv ist, ist;
M der Gehalt (Gewichtsprozent) der Verbindung (a), die eine Gruppe aufweist, die gegenüber einer Carbodiimidgruppe reaktiv ist, ist; und
Mn das zahlengemittelte Molekulargewicht des Polyolefinharzes (A) ist.

3.  Körper gemäß Anspruch 1, worin das Pololefinharz (A) eine Maleinsäuregruppe aufweist.

4.  Körper gemäß Anspruch 1, worin der Carbodiimidgruppengehalt 0,0001 bis 140 mmol pro 100 g der Harzkomponente davon beträgt.


## Revendications

1.  Article moulé (I) obtenu par moulage d'une composition de résine (H) renforcée par une charge comprenant

(i) de 0,01 à 50 parties en poids d'une polyoléfine modifiée (C) ou d'une composition (E) ;
(ii) de 20 à 99 parties en poids d'une résine à base de polypropylène (F) ; et
(iii) de 1 à 80 parties en poids d'une charge (G)

pour 100 parties en poids du total de (F) et (G),
dans lequel la polyoléfine modifiée (C) est obtenue en faisant réagir une résine polyoléfinique (A) ayant un groupe qui réagit avec un groupe carbodiimide et
un composé (B) ayant un groupe carbodiimide,
et ayant une teneur en groupe carbodiimide de 1 à 200 mmol pour 100 g de la polyoléfine modifiée telle que déterminée par spectroscopie infrarouge, et
dans lequel la composition (E) est obtenue par réaction de la résine polyoléfinique (A) et du composé (B) en présence d'une polyoléfine non modifiée (D) et
dans lequel la charge (G) comprend une fibre de carbone.

2.  Article selon la revendication 1, dans lequel la résine polyoléfinique (A) satisfait à la relation

$$0,1 < Mn / \{(100 - M) x f / M\} < 6 \qquad (1)$$

dans laquelle

f est la masse moléculaire (g/mol) d'un composé (a) ayant un groupe qui réagit avec un groupe carbodiimide ;
M est la teneur (% en poids) du composé (a) ayant un groupe qui réagit avec un groupe carbodiimide ; et
Mn est la masse moléculaire moyenne en nombre de la résine polyoléfinique (A).

3.  Article selon la revendication 1, dans lequel la résine polyoléfinique (A) a un groupe acide maléique.

4. Article selon la revendication 1, dans lequel la teneur en groupe carbodiimide est de 0,0001 à 140 mmol pour 100 g du composant résine de celui-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4198243 A
- JP 2003277525 A
- JP 2005213478 A

- JP 2005213479 A
- WO 2005097840 A
- WO 2005098290 A